# EUROPEAN PATENT APPLICATION

(11) **EP 1 344 730 A1**
(43) Date of publication of application: **17.09.2003**
(21) Application number: 02425140.7
(22) Date of filing: 11.03.2002
(51) Int. Cl.: B65G 21/20, B65B 21/20

(54) **Device for spacing equally guide elements or miscellaneous tools**

(71) Applicant: BETT SISTEMI s.r.l., 41012 Carpi (Modena) (IT)
(72) Inventor: Bettati, Tienno, c/o Bett Sistemi S.R.L., 41012 Carpi (Modena) (IT)
(74) Representative: Corradini, Corrado

(57) **Abstract**

An equispacing device for guide elements or miscellaneous tools, comprising a linear structure provided with slide seats (11) for at least three suspension blocks (41a-e) for a guide or a tool comprises at least one block (41b-d) from which there extend in one direction an externally threaded rotatable sleeve (42b-d) and in the opposite direction an internally threaded fixed sleeve (43b-d) coaxial with the rotatable sleeve, the threads of said sleeves having the same diameter and the same pitch, means (14) being provided to rotate said rotatable sleeve.

## Description

This patent relates to the conveying, processing or handling of groups of articles formed from equispaced articles positioned along parallel alignments or articles aligned equispaced along the same line.

Conveying lines for articles, for example for miscellaneous bottles or containers, are known, in which individual alignments of articles travel in side-by-side lines on a belt.

Each alignment is separated from the adjacent alignments by a stationary guide, the guides being disposed parallel to each other and equispaced by a pitch substantially equal to the diameter of the articles, or to their transverse dimension.

Reference will be made hereinafter to articles of right cylindrical cross-section, but the ensuing description is also valid for articles of different cross-section having a determined dimension transverse to their travel direction.

The said guides are suspended from bridge structures overlying the lines by suspension means which are slidable to enable the distance between the guides to be adapted to the diameter of the articles.

The distance between the guides is generally adapted manually by a necessarily lengthy and laborious operation.

Means for mechanically equispacing the guide suspension means are known, comprising a pantograph system, however the application of these means is limited by the fact that they refer to a fixed position, generally the centre line, of the conveyor and hence do not enable its optimum use.

They also have to be designed for a determined conveyor, and present a rigid construction which is difficult to modify to meet different requirements. The object of this patent is to provide an equispacing device of high flexibility in use, of simple and reliable construction, and able not only to correctly position the guides of the aforesaid conveyors in order to rapidly adapt them to the dimensions of the articles to be conveyed, but also to equally space small tools intended to operate on articles positioned equispaced along the same alignment in order to modify their distance apart, even during their actual working.

In particular, the invention finds application in devices for gripping and transferring aligned articles which have to be withdrawn at a certain distance apart and deposited at a different distance apart.

The objects of the invention are attained by a device having the characteristics defined in the claims.

Specifically, said objects are attained by a device comprising a linear structure provided with slide seats for at least three suspension blocks for a guide or a tool, in which at least one block comprises an externally threaded rotatable sleeve extending in one direction and an internally threaded fixed sleeve extending in the opposite direction, the threads of said sleeves having the same diameter and the same pitch, means being provided to rotate said rotatable sleeve.

The constructional and operational merits and characteristics of the invention will be apparent from the ensuing detailed description illustrating a particular preferred embodiment shown in the accompanying drawings and given by way of non-limiting example.

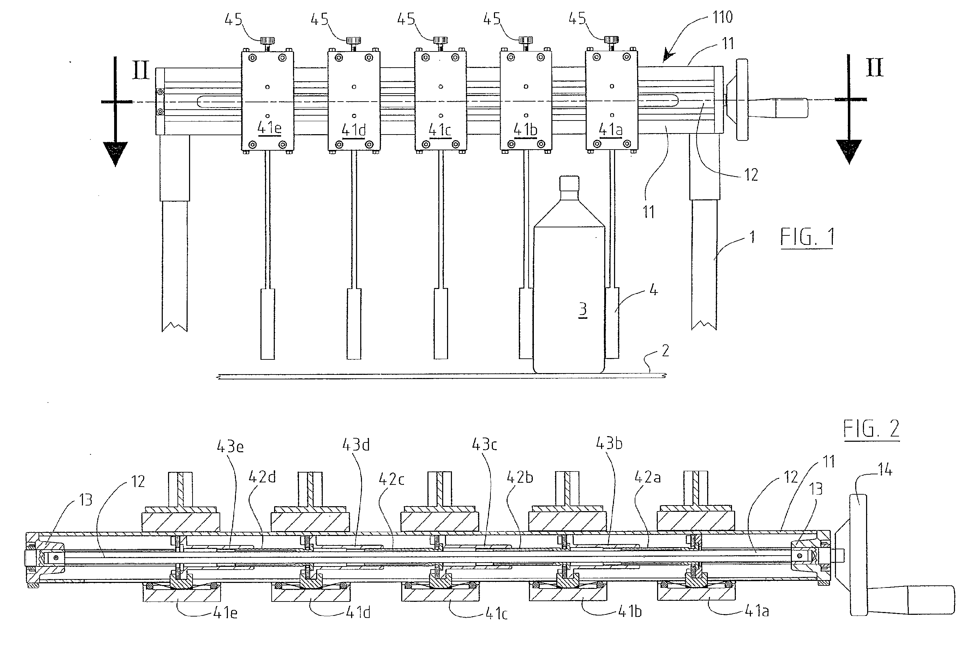

Figure 1 is a front view of one embodiment of the invention.

Figure 2 is the section II-II of Figure 1.

Figure 3 is a perspective view of the embodiment of Figure 1 but with some slight modifications.

Figure 4 is a front view of a second embodiment.

Figure 5 is the section V-V of Figure 4.

Figure 6 is an enlarged detail of Figure 2.

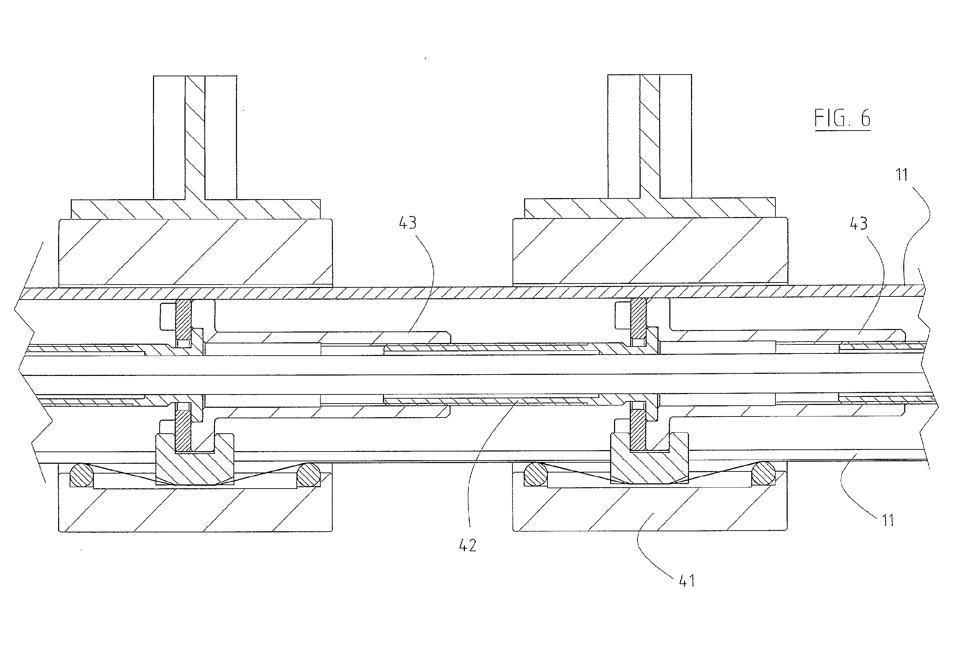

Figures from 1 to 3 and Figure 6 show a linear structure 110 constituting the overhead beam of a bridge structure 1 lying above a conveyor belt 2 on which bottles 3 travel in rows separated by the equispaced guides 4. Said guides are individually suspended from blocks 41 which slide in suitable seats 11 along the structure 110.

In the illustrated example five blocks 41 indicated by 41a, 41b, 41c, 41d and 41e are present.

In the interior of the structure 110 there is positioned a shaft 12 of non-circular cross-section, namely of hexagonal cross-section in the example, able to rotate on two end supports 13, and associated with an operating handwheel 14.

Each of the blocks 41 is associated in the interior to the structure 110 with an externally threaded first rotatable sleeve 42 torsionally locked to the shaft 12 but free to slide along it, and with an internally threaded fixed second sleeve 43 mounted on the first sleeve 42 of the adjacent block. The two end sleeves 41a and 41e are provided respectively with only a first sleeve 42a and with only a second sleeve 43a.

Each of the blocks 41 is provided with means, such as pressure screws 45, for preventing their sliding within the seats 11.

It is apparent that instead of the operating handwheel an electric motor with controlled advancement can easily be installed which, if associated with a programmable microprocessor, can automatically modify the distance apart and the position of the guides 4 on the conveyor.

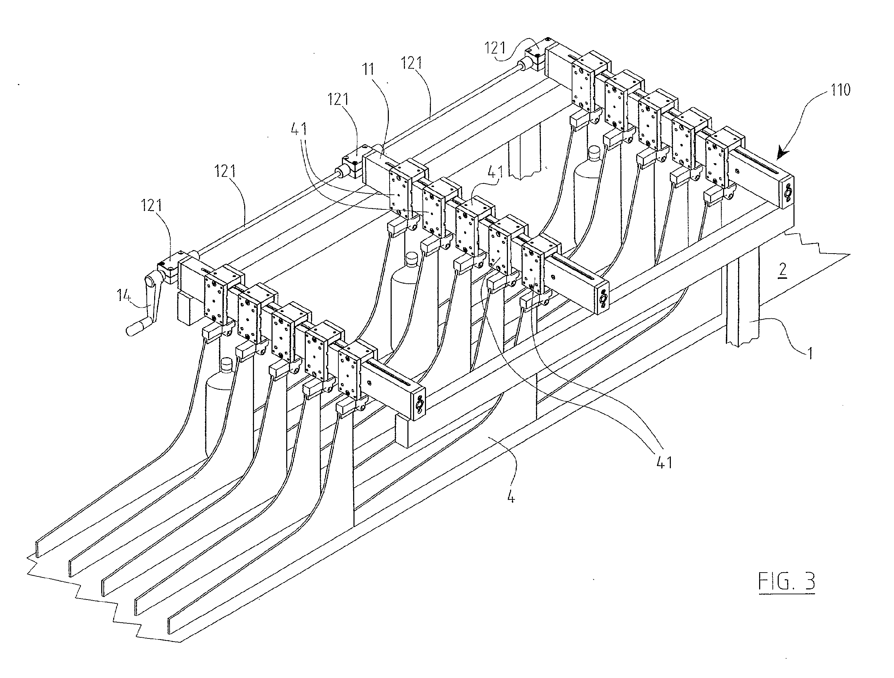

It is likewise apparent that at least two structures 110 are generally present over the belt 2, in which case the commands for rotating the shafts 12 of each individual structure 110 are connected together by a mechanism 121 for synchronously rotating the shafts, as is clearly understandable from Figure 3.

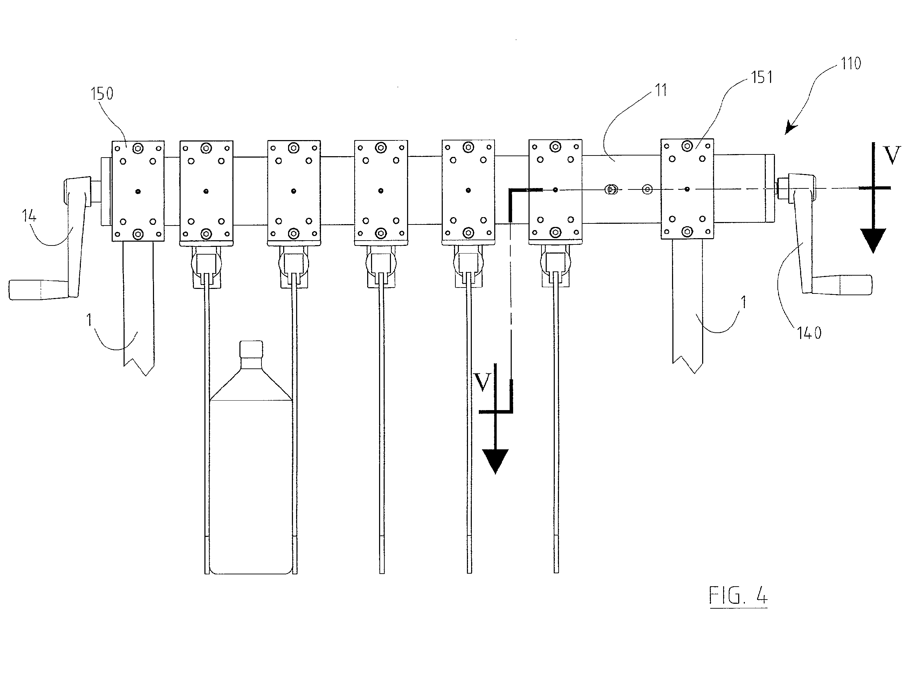

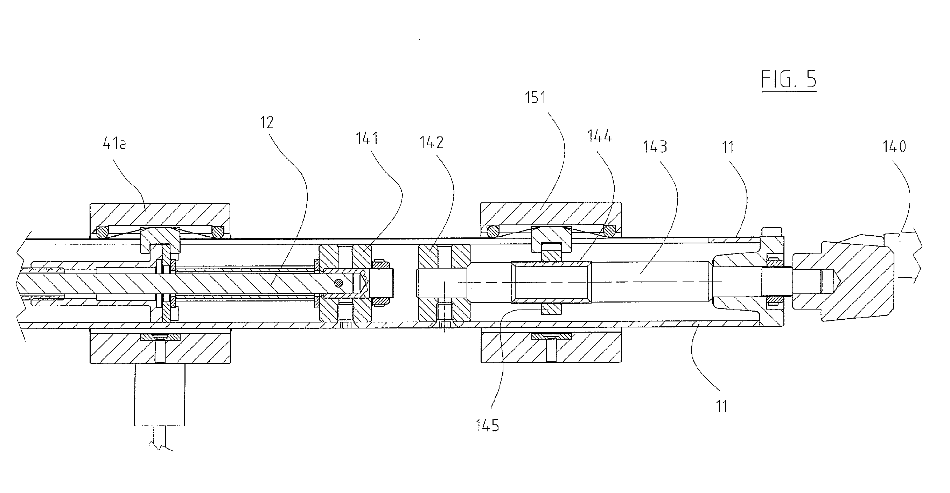

Figures 4 and 5 show an embodiment in which all the blocks 4 can be moved transversely to the belt without varying their distance apart.

In this case the structure 110 is axially slidable on two supports 150 and 151, the handwheel 14 for operating the hexagonal shaft 12 being positioned on the left end (with reference to the figure) of the structure 110.

That end of the shaft 12 distant from the handwheel 14 rotates within a support 141 fixed to the interior of the structure 110.

To the right (with reference to the figure) of the support 141 there is a second support 142 also fixed to the structure 110, and in which there rotates the end of a second shaft 143 rotatably supported at the end of the guides and provided with an operating handwheel 140.

The shaft 143 presents a threaded central portion 144 on which a ring 145 rigid with the support 151 is screwed.

From the aforegoing description it is apparent that the invention is suitable for modular construction of indefinite length, in which each module consists of a block 41 with the respective sleeves 42 and 43 as shown in Figure 6, each module being connected to the adjacent module by screwing its sleeve 42 into the sleeve 43 of the adjacent module.

From Figure 3 it is interesting to note the system for connecting the guides 4 to the blocks 41 by frontal insertion, thus enabling the individual guides to be replaced without intervening on the adjacent guides.

The invention operates as follows.

To better explain the operation, the sleeves 42 associated with the individual blocks are indicated by 42a, 42b, 42c and 42d, and the sleeves 43 are indicated by 43b, 43c, 43d and 43e.

Assuming for simplicity that sliding of the block 41a has been prevented, the sleeve 42a on being screwed into the sleeve 43b pulls the block 41 b towards the left in the figure, and in the same manner the blocks 41c, 41d and 41e are pulled by the same amount towards the block on their left. In this manner the distance between the guides 4 varies by the same amount, while leaving fixed in position the first guide on the left, i.e. the guide 4 rigid with the block 41a.

However it is clear that sliding of any one of the other guides can be prevented at choice without modifying the operation of the device.

If for example sliding of the central block 41c is prevented, clockwise rotation of the handwheel 14 causes the sleeve 42b to be drawn into the sleeve 43c, the sleeve 42a to be screwed into the sleeve 43b, the sleeve 42c to be screwed into the sleeve 43d, and the sleeve 42d to be screwed into the sleeve 43e, by which the blocks 41a, 41 b, 41d and 41e symmetrically approach the central block 41c.

With reference to Figures 4 and 5, when the group of blocks is to be shifted transversely without varying their distance apart, the operating handwheel 140 is rotated clockwise to move the guides 11 towards the left relative to the supports 151 and 150.

## Claims

1. An equispacing device for guide elements or miscellaneous tools, comprising a linear structure (111) provided with slide seats (11) for at least three suspension blocks (41) for a guide (4) or a tool, **characterised in that** at least one block (41) comprises an externally threaded rotatable sleeve (42) extending in one direction and an internally threaded fixed sleeve (43) extending in the opposite direction, said sleeves being coaxial and the threads of said sleeves having the same diameter and the same pitch, means (14) being provided to rotate said rotatable sleeve.

2. A device as claimed in claim 1, **characterised in that** the rotatable sleeve presents an axial cavity of non-circular cross-section, and is mounted on a shaft (12) of matching cross-section which can be rotated from the outside

3. A device as claimed in claim 2, **characterised in that** said shaft is of hexagonal cross-section.

4. A device as claimed in claim 2, **characterised in that** said shaft is associated with an external operating handwheel (14).

5. A device as claimed in claim 2, **characterised in that** said shaft is associated with an electric motor of controlled advancement type.

6. A device as claimed in claim 1, **characterised in that** at least one of the blocks is provided with means (45) for preventing its sliding on the guides.

7. A device as claimed in claim 1, **characterised in that** said elongate structure (110) constitutes the overhead beam of a bridge structure (1).

8. A device as claimed in claim 7, **characterised in that** said bridge structure is associated with an underlying conveyor belt (2).

9. A device as claimed in claim 1, **characterised in that** at least two structures (110) are associated with the same conveyor belt, the shafts of said structures being made to rotate synchronously by a single control mechanism (121).

10. A device as claimed in claim 1, **characterised in that** the linear structure (110) is slidable axially on two supports (150, 151) of the bridge structure and is secured to one of these (151) by a rotatable axial shaft (143) provided with a threaded portion (144) and screwed into a ring (145) rigid with the support (151).

11. A device as claimed in claim 10, **characterised in that** the shaft (143) is operated by an external handwheel (140).
